# EUROPEAN PATENT APPLICATION

(11) **EP 0 678 797 A1**
(43) Date of publication of application: **25.10.1995**
(21) Application number: 95610019.2
(22) Date of filing: 21.04.1995
(51) Int. Cl.: G05D 16/06, F16K 1/30, F17C 13/04

(54) **Two-steps reduction valve for gaseous media**

(30) Priority: 22.04.1994 DK 467/94
(71) Applicant: KOSAN TEKNOVA A/S, Dk-2990 Niva (DK)
(72) Inventor: Kryger, Villy Ebert, DK-3000 Helsingor (DK)
(74) Representative: Tscherning, Christian

(57) **Abstract**

The reduction valve comprises a low-pressure chamber (24) with a low-pressure diaphragm (25) and a high-pressure chamber (7) with a high-pressure diaphragm (10) as well as a diaphragm spindle (14) which is fastened in the high-pressure diaphragm and extends therethrough to act on a valve (B) in the neck (A) of a gas cylinder. The gas flows from the high-pressure chamber (7) to the low-pressure chamber (24) through a gas passage (17,18,43,44) disposed in the diaphragm spindle (14). In the gas passage a low-pressure valve (21) is mounted, which by means of a handle (41) and a closing rod (30) is opened in the direction towards the gas pressure from the high-pressure chamber simultaneously with the opening of the valve (B) in the neck (A).

## Description

The invention relates to a two-stage reduction valve for gaseous media, comprising a high-pressure assembly with a high-pressure diaphragm acting on a high-pressure valve member preferably disposed in the neck of a gas cylinder, a low-pressure assembly with a low-pressure diaphragm acting on a low-pressure valve member positioned in a gas passage connecting the under side of the high-pressure diaphragm with the under side of the low-pressure diaphragm, such that the low pressure diaphragm is acted on by the pressure after the seat of the low-pressure valve, a closing rod connected with an operating handle, said closing rod being restrictedly displaceably connected with a diaphragm spindle which is fixedly connected with the high-pressure diaphragm and extending therethrough, and which in the open position acts on the high-pressure valve member mounted in the neck by means of its lower end and which at its upper end is provided with a substantially cylindrical bore for displaceably receiving the lower end of the closing rod, such that the high-pressure valve in one position of the operating handle and thereby the closing rod is kept closed independently of the high-pressure diaphragm, while it in a second position of the operating handle is movable by the high-pressure diaphragm, the closing rod being fixedly connected with the low-pressure diaphragm and furthermore engaging the low-pressure valve member in such a way that the low-pressure valve member closes, when the closing rod is moved to the closing position.

Such a reduction valve is known from Danish Patent No. 165 068. In this known reduction valve the low-pressure valve body is a cylindrical slide valve positioned in a passage between the low-pressure chamber and the hose connection of the reduction valve, and the connection between the closing rod and the slide valve is made by means of a spring-loaded angular rocker arm, one end of which engages the closing rod and the other end of which engages the slide valve and moves it towards a seat such that the gas passage is closed, when the closing rod is moved to the closing position.

This design of the reduction valve suffers from the drawback that when mounting the rocker arm it is necessary to adjust the opening point of the low pressure valve by adjusting the angle of bending of each individual rocker arm during the mounting to equalize differences due to production tolerances between the individual reduction valves.

It is the object of the invention to provide a two-stage reduction valve of the type described by way of introduction, in which said drawback is reduced or completely eliminated.

This object is according to the invention met by the gas passage being substantially positioned in the diaphragm spindle.

By placing the gas passage with the low pressure valve in the diaphragm spindle, a simpler construction is attained and consequently lower production costs. As the low-pressure valve is thus removed from the passage between the low-pressure chamber and the hose connection the additional advantage is achieved that it becomes possible to place a shut-off valve in the low-pressure chamber upstream of the inlet to the hose connection. Furthermore, it is now possible to design hose connections with varying inner diameters, the diameter being not dependent on the diameter of the slide valve of the low-pressure valve.

In a preferred embodiment of the reduction valve according to the invention the low-pressure valve member is adapted to open against the gas pressure on the under side of the high-pressure diaphragm, and that the lower end of the closing rod acts on the low-pressure valve member to open in the open position of the closing rod. In this embodiment the movement of the low-pressure diaphragm is transferred directly to the valve member of the low-pressure valve by means of rigid elements, which may be manufactured with high tolerances and consequently do not need a subsequent adjustment and adaptation during the assembling. It is furthermore attained that in the closed position, gas, which might leak from the valve in the gas cylinder neck and gather in the high-pressure chamber, will press the low-pressure valve against its seat, whereby gas thus does not escape through the hose connection of the reduction valve. In the known reduction valve there is a risk that leaking gas in the high-pressure chamber may at an adequately high pressure open the low-pressure valve member, as the low-pressure valve member opens in the direction of the gas pressure and is only retained against its seat by the spring power of the rocker arm.

Another embodiment of the reduction valve is characteristic in that the low-pressure valve member is acted on for closing by a compression spring. The compression spring ensures that the low-pressure valve body always is biased in the direction towards the seat, such that the closing of the valve is not exclusively dependent on the gas pressure upstream of to the valve.

In further embodiments a filter may be provided in the gas passage, and this filter may be retained between the compression spring and a shoulder in the gas passage. The filter contributes to preventing any impurities from the gas in the gas cylinder from settling in the low-pressure valve or in other parts of the reduction valve and thereby impeding a correct functioning. By the suggested retaining of the filter the provision of separate retaining means is avoided and a simple and quick assembling of the filter is achieved.

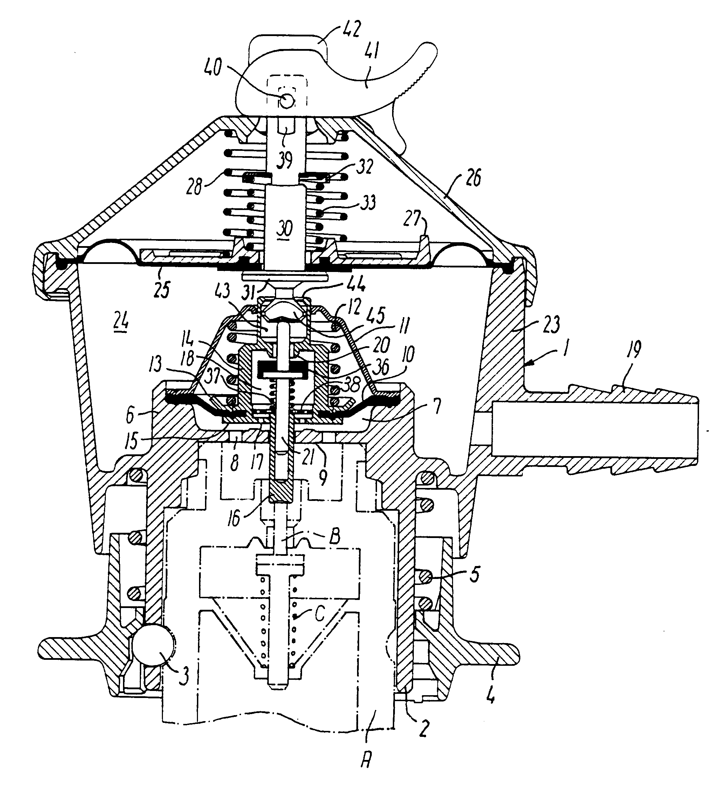

The invention will be explained in the following by means of an embodiment and with reference to the drawing which shows a vertical section of a two-stage reduction valve according to the invention.

The valve housing 1 is detachably placed over a throat A, permanently mounted in the opening of a gas cylinder, a downwards facing, circumferential skirt 2 of the valve body surrounding the upper part of the neck A and being secured to the neck by means of a number of balls 3 which are pressed into engagement with a circumferential groove on the outside of the neck by means of a sliding ring 4 which is pressed downwards by a spring 5.

In upwards extension of the skirt 2 a wall 6 surrounds a high-pressure diaphragm chamber 7 which is closed towards the neck by means of a wall 9 having flow openings 8 and at the top by means of a high-pressure diaphragm 10 which along its outer periphery is fastened to the wall 6 by means of a spring housing 11 which receives a diaphragm spring 12 interposed between the upper part of the housing 11 and a diaphragm disc 13 abutting the upper side of the high-pressure diaphragm 10.

A throughgoing diaphragm spindle 14 is fastened in the centre of the high-pressure diaphragm 10, said spindle having below the diaphragm 10 in support thereof a diaphragm seat 15 and the downward extending end 16 of which in the functioning positioning of the reduction valve acts on a valve spindle B in the neck A for opening against the force from a biased spring C for closing of the valve spindle B. Hereby the valve spindle B, which constitutes a high-pressure valve member, can in the functioning position be controlled by the diaphragm valve 10 with the spring 12 in combination with the bias acting on the valve spindle.

From the high-pressure diaphragm chamber 7 extends a gas passage provided in the diaphragm 14, said passage comprising holes 17 at the diaphragm seat 15 for passage of gas from the high-pressure diaphragm chamber 7 to a hollow space 18 in the membrane spindle, said hollow space being, over a valve seat 20 and a low-pressure valve member 21 belonging to the seat, said low-pressure valve member being longitudinally displaceable and biased by a spring 37 for closing, connected with a concentrically positioned bore 43 in the membrane spindle, which bore has a mouth 44, through which the gas passage opens into a low-pressure diaphragm chamber 24 positioned within a wall section 23 of the valve housing 1, said chamber being closed downwards by the wall 6 and the high-pressure diaphragm 10 with the spring housing 11 and upwards by a low-pressure diaphragm 25. The latter is along its periphery fastened between the upper edge of the wall section 23 and a spring housing, between the upper part of which and a diaphragm disc 28 abutting the upper side of the diaphragm 25 a low-pressure diaphragm spring 28 is inserted.

In the drawing, the diaphragm spindle 14, the diaphragm seat 15 and the lower end 16 are for the sake of clarity shown as being integral, but the diaphragm spindle may actually consist of several pieces to allow the mounting of the valve member 21 with spring 37.

Through the low-pressure diaphragm 25 there is inserted a closing rod 30, which for the provision of a support for the diaphragm 25 is shaped integrally with a diaphragm seat 31. By means of a safety spring 33 inserted between the diaphragm disc 27 and a spring disc 32 the diaphragm 25 is normally kept pressed in close abutment to the diaphragm seat 31, but if the pressure in the low-pressure diaphragm chamber 24 exceeds a certain limit, it will be able to lift the diaphragm 25 from the seat 31, not only against the effect of the diaphragm spring 28, but also against the effect of the safety spring 33, such that the gas may escape through the opening of the diaphragm 25 around the closing rod 30.

The lower end of the closing rod 30 has a head 45, which is inserted down in the cylindrical bore 43 in the upper end of the diaphragm spindle 14. The upwards facing mouth 44 of the bore 43 is made as a throttle of reduced diameter, and the width of the head 45 is larger than the diameter of the mouth 44, but the head has such a shape that when the closing rod 30 is placed obliquely relative to the axis of the diaphragm 14 it may be introduced into the bore through the mouth 44, but the head because of its larger width is prevented from being pulled out of the bore 43, when the closing rod in mounted position is coaxial with the diaphragm spindle.

The upper end of the closing rod 30 has an oblong hole 39, through which a pin 40 passes, which is eccentrically fastened in an operating handle 41 which is pivotally connected with a top member 42 on the upper end of the spring housing 26 and may be turned 180°C anticlockwise from the functioning position shown in the drawing to a closing position.

In the functioning position the lower end 16 of the diaphragm spindle 14 is pressed against the spindle B in the gas cylinder neck A, such that the gas may flow into the high-pressure chamber 7 through the holes 8. At the same time the head 45 of the closing rod is pressed against the low-pressure valve member 21 to lift it from the seat 20, whereby the gas may flow through the holes 17, 18, the bore 43 and out through the mouth 44 to the low-pressure diaphragm chamber 24 and from there out of the reduction valve through a hose connection 19.

By turning the operating handle 41 to the closing position, the closing rod 30 is lifted and takes the diaphragm spindle upwards, whereby its influence on the valve spindle B ceases, the valve spindle B closing due to its spring bias. Simultaneously the pressure of the closing rod against the upper end of the low-pressure valve member 21 ceases, which causes it to be pressed into abutment against the seat 20 by the spring 37.

As will appear from the drawing a filter 38 is inserted in the hollow space 18, said filter preventing impurities from being carried along by the gas stream and from blocking the low-pressure valve 20,21. The filter is interposed between the spring 37 and a shoulder in the diaphragm spindle 14 and can thus easily be placed simultaneously with the mounting of the spring.

## Claims

1. A two-stage reduction valve for gaseous media comprising a high-pressure assembly with a high-pressure diaphragm (10) acting on a high-pressure valve member (B) preferably disposed in the neck (A) of a gas cylinder, a low-pressure assembly with a low-pressure diaphragm (25) acting on a low-pressure valve member (21) positioned in a gas passage (18) connecting the under side of the high-pressure diaphragm with the under side of the low-pressure diaphragm, such that the low pressure diaphragm (25) is acted on by the pressure after the seat (20) of the low-pressure valve, a closing rod (30) connected with an operating handle (41), said closing rod being restrictedly displaceably connected with a diaphragm spindle (14) which is fixedly connected with the high-pressure diaphragm (10) and extending therethrough, and which in the open position acts on the high-pressure valve member (B) mounted in the neck (A), by means of its lower end (16) and which at its upper end is provided with a substantially cylindrical bore (43) for displaceably receiving the lower end (45) of the closing rod (30), such that the high-pressure valve in one position of the operating handle (41) and thereby of the closing rod (30) is kept closed independently of the high-pressure diaphragm, while it in a second position of the operating handle (41) is movable by the high-pressure diaphragm (10), the closing rod (30) being fixedly connected with the low-pressure diaphragm (25) and furthermore engaging the low-pressure valve member (21) in such a way that the low-pressure valve member closes, when the closing rod (30) is moved to the closing position, **characterized** in that the gas passage is substantially positioned in the diaphragm spindle.

2. A two-stage reduction valve according to claim 1, **characterized** in that the low-pressure valve member (21) is adapted to open against the gas pressure on the under side of the high-pressure diaphragm, and that the lower end (45) of the closing rod (30) acts on the low-pressure valve member (21) to open in the open position of the closing rod.

3. A two-stage reduction valve according to claim 1 or 2, **characterized** in that the low-pressure valve member (21) is acted on for closing by a compression spring (37).

4. A two-stage reduction valve according to claims 1 -3, **characterized** in that a filter (38) is provided in the gas passage.

5. A two-stage reduction valve according to claim 4, **characterized** in that the filter (38) is retained between the compression spring (37) and a shoulder in the gas passage (18).
